# EUROPÄISCHE PATENTANMELDUNG

(11) **EP 1 010 872 A2**
(43) Veröffentlichungstag der Anmeldung: **21.06.2000**
(21) Anmeldenummer: 99122009.6
(22) Anmeldetag: 11.11.1999
(51) Int. Cl.: F01N 7/18, F16L 27/111

(54) **Flexschlauch**

(30) Priorität: 18.12.1998 DE 19858634
(71) Anmelder: Volkswagen Aktiengesellschaft, 38436 Wolfsburg (DE)
(72) Erfinder: Pape, Karl, Dipl.-Ing., 38442 Wolfsburg (DE)

(57) **Zusammenfassung**

Ein erfindungsgemäßer Flexschlauch, der insbesondere für eine Abgasleitung eines Verbrennungsmotors bei einem Kraftfahrzeug vorgesehen ist, weist zumindest einen Wellenbalg 10, eine Außenumflechtung 30 und bevorzugt zwei Endhülsen auf, die an den beiden Enden des Flexschlauches den Wellenbalg 10 und die Außenumflechtung 30 fassen und halten, wobei die Außenumflechtung 30 eine Wellung bzw. Ondulierung aufweist. Durch die Wellen der Ondulierung der Außenumflechtung 30 wird an mehreren Stellen eine Vorspannung zwischen der Außenumflechtung 30 und dem Wellenbalg 10 erzeugt, die zur Verhinderung von Rasselgeräuschen bei Schwingungen bzw. Vibrationen dient. Im Ergebnis wird eine Resonanzbedämpfung des Wellenbalgs 10 durch Reibung zwischen diesen Bauteilen bewirkt. Die durch die Wellung erzeugte Vorspannung ist dabei im allgemeinen gering und hängt von unterschiedlichen Parametern, wie beispielsweise den geometrischen Abmessungen der Elemente des Flexschlauches, den eingesetzten Materialien und den zu absorbierenden bzw. zu dämpfenden Schwingungen ab.

## Beschreibung

Die vorliegende Erfindung betrifft einen Flexschlauch gemäß dem Oberbegriff des Patentanspruches 1.

Als Flexschlauch wird ein flexibles Leitungselement für eine Abgasanlage eines Verbrennungsmotors bei einem Kraftfahrzeug bezeichnet, wobei solche Flexschläuche in jüngster Zeit sehr weich ausgelegt sind, um eine sehr gute Schwingungsentkopplung zwischen dem Motor und der restlichen Abgasanlage zu erreichen. D.h., daß der Flexschlauch zwischen dem Motor und dem restlichen Abgasleitungssystem angeordnet ist.

Bei dieser Anordnung werden jedoch die Schwingungen, die im Betrieb des Motors entstehen, weiterhin auf zumindest einen Teil des Flexschlauches übertragen. Durch diese Schwingungen treten im Laufe der Betriebsdauer Geräusche und Schädigungen am Flexschlauch auf, für deren Verhinderung im Stand der Technik bereits unterschiedliche Lösungen vorgeschlagen wurden.

So ist beispielsweise aus der DE-OS 37 08 415 ein flexibles Leitungselement, also ein Flexschlauch bekannt, der den bekannten Aufbau (radial von außen nach innen gesehen) aufweist: eine Außenumflechtung 4, einen Balg 1, und einen innenliegenden Metallschlauch 11. Endstücke 12 und 13, die an den beiden Enden des Flexschlauches vorgesehen sind, fassen und halten den Balg 1, die Außenumflechtung 4 und den Metallschlauch 11 zusammen. Zur Verhinderung von Schwingungen und zur Schallabsorption sind Isolierlagen 9 und 10 zwischen dem Metallschlauch 11 und dem Balg 1 eingebracht. Diese Isolierlagen 9 und 10 sind als elastische Zwischenlagen ausgebildet, und dienen der Dämpfung.

Eine andere Lösung zur Dämpfung von Schwingungen an einem Flexschlauch ist aus der DE-OS 40 34 055 bekannt. Dort sind flexible Dämpfungsglieder (z.Bsp. 37 oder 44) am Außenumfang des Flexschlauchs zusätzlich vorgesehen, die als federelastische Elemente ausgeführt sind und eine entsprechende Andruckkraft auf die Außenoberfläche des Flexschlauches ausüben.

Die aus dem Stand der Technik bekannten Lösungen bedingen somit einerseits das Vorsehen zusätzlicher Bauteile am Flexschlauch, sowie andererseits diese zusätzlichen Bauteile eine komplizierte Montage des Flexschlauches nach sich ziehen und damit die Fertigung des Flexschlauches teuer macht.

Es ist daher die Aufgabe der vorliegenden Erfindung, einen Flexschlauch zu schaffen, der eine sichere und dauerhafte Geräuschvermeidung ermöglicht, wobei gleichzeitig die Herstellung vereinfacht und dadurch kostengünstiger werden soll.

Diese Aufgabe wird durch einen Flexschlauch gelöst, der die Merkmale aufweist, die im kennzeichnenden Teil des Patentanspruchs 1 angegeben sind.

Demnach weist ein erfindungsgemäßer Flexschlauch, der insbesondere für eine Abgasleitung eines Verbrennungsmotors bei einem Kraftfahrzeug vorgesehen ist, einen Wellenbalg, eine Außenumflechtung und zwei Endhülsen auf, die an den beiden Enden des Flexschlauches den Wellenbalg und die Außenumflechtung fassen und haften, wobei die Außenumflechtung erfindungsgemäß eine Wellung bzw. Ondulierung aufweist.

Durch die Wellen der Ondulierung der Außenumflechtung wird bei der bevorzugten Ausführungsform an mehreren Stellen eine Vorspannung zwischen der Außenumflechtung und dem Wellenbalg erzeugt, die zur Verhinderung von Rasselgeräuschen bei Schwingungen bzw. Vibrationen dient. Im Ergebnis erfolgt eine Resonanzbedämpfung des Metallbalgs durch Reibung zwischen diesen Bauteilen. Die durch die Wellung erzeugte Vorspannung ist im allgemeinen gering und hängt von unterschiedlichen Parametern, wie beispielsweise den geometrischen Abmessungen der Elemente des Flexschlauches, den eingesetzten Materialien und den zu absorbierenden bzw. zu dämpfenden Schwingungen ab.

Grundsätzlich ist die Anzahl und/oder die Ausrichtung der Wellen der Ondulierung vom Einsatzfall abhängig und läßt sich durch Versuche optimieren.

Vorteilhafte Weiterbildungen des erfindungsgemäßen Flexschlauches sind der Gegenstand von Unteransprüchen.

Die Erfindung wird im folgenden anhand einer ausführlichen Beschreibung einer Ausführungsform beschrieben, die sich auf die zugehörigen Zeichnungen bezieht.

In den Zeichnungen zeigt bzw. zeigen die:
Fig. 1 eine Teilquerschnittansicht eines Flexschlauches nach der bevorzugten Ausführungsform gemäß der vorliegenden Erfindung;
Fig. 2 eine Querschnitt-Darstellung des Flexschlauches entlang der Linie A-A in der Figur 1; und
Fig. 3 ein Diagramm, welches das Verhältnis des Dämpfungsverhaltens eines herkömmlichen und eines erfindungsgemäßen Flexschlauches wiedergibt.

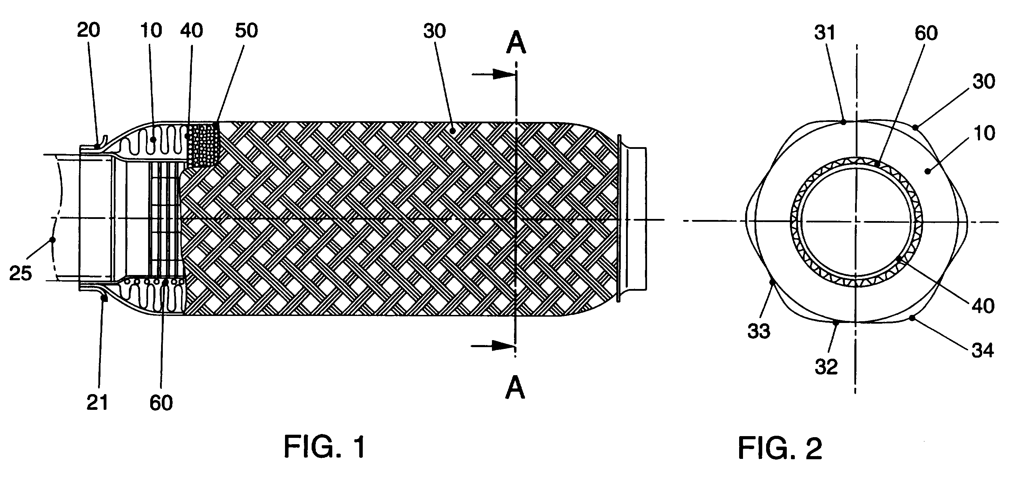

In den Figuren 1 und 2 ist eine bevorzugte Ausführungsform eines erfindungsgemäßen Flexschlauchs dargestellt. Von außen nach innen sind dabei die im folgenden beschriebenen Elemente am Flexschlauch vorgesehen. Die Außenumflechtung 30, die in der dargestellten Ausführungsform ein Kreuzgeflecht aufweist und wie in der Figur 2 zu erkennen ist, 6 Längswellen aufweist, die über den Umfang gleichmäßig verteilt sind. Diese Längswellen führen dazu, daß in der Querschnittdarstellung nach der Figur 2 an der Oberseite und an der Unterseite des Flexschlauchs eine Abplattung 31 und 32 vorliegt, sowie jeweils in jedem Quadranten bei 45° eine Abplattung 33 vorgesehen ist. Zwischen diesen Abplattungen 31 bis 33 liegen die Wellenberge 34 der Ondulierung. Radial weiter innenliegend folgt auf die Außenumflechtung 30 der Wellenbalg 10, der vorzugsweise als Metallbalg bzw. Metallwellenbalg eine 2-lagige Wandung aufweist, deren einzelne Lagen zwischen 0,15 und 0,25 mm Dicke aufweisen. Als nächstes Bauelement folgt innerhalb des Wellenbalgs 10 ein Metallschlauch 40, der zum Beispiel als Agraffschlauch oder Drahtgeflechtschlauch ausgebildet ist. Dieser Metallschlauch 40 ist für einen Flexschlauch, der eine minimale Konfiguration aufweisen soll, nicht notwendig. Falls er eingesetzt wird, so zur Wärmeisolierung und zur möglichst verwirbelungsfreien Abgasströmungsführung. Hierdurch können u.a. Strömungsgeräusche im Inneren des Flexschlauches reduziert werden.

Die oben erwähnte Anzahl der Längswellen ist beispielsweise abhängig von folgenden Anforderungen: hohe Dämpfung erwünscht-> mehr Längswellen -> größere Reibung -> höhere Dämpfung; oder geringe Dämpfung erwünscht -> wenige Längswellen -> geringe Reibung -> geringe Dämpfung.

An den Enden des Flexschlauches (siehe in der Figur 1) sind Endhülsen 20 vorgesehen, die die Außenumflechtung 30 und den Wellenbalg 10 einfassen und haften. Diese Endhülsen 20 erleichtern auch das Einschweißen der dünnwandigen Bauelemente des Flexschlauches in das restliche Abgasleitungssystem, zum Beispiel an einer Abgasrohrleitung 25, die in der Figur 1 durch gestrichelte Linien angedeutet ist. Zudem weist jede Endhülse 20 eine Aufweitung 21 auf, die das Einführen der Bauelemente des Flexschlauches in die Endhülse 20 erleichtert.

Zusätzlich können noch wahlweise oder auch gemeinsam Drahtgestricke 50 und 60 vorgesehen werden, um die Resonanzschwingungen des Wellenbalgs 10 zu dämpfen und um Rasselgeräusche, die infolge der Berührung mit dem Metallschlauch 40 auftreten können, zu vermeiden und/oder um die Resonanzschwingungen des Wellenbalgs 10 zu dämpfen und um Rasselgeräusche, die infolge der Berührung mit der Außenumflechtung 30 noch auftreten könnten, zu vermeiden.

Hierbei ist festzuhalten, daß der erfindungsgemäße Flexschlauch zumindest die folgenden Bauelemente umfaßt: den Wellenbalg 10, die Außenumflechtung 30 und die Endhülsen 20, wobei die Endhülsen 20 erforderlichenfalls durch eine entsprechend ausgeführte Verschweißung ersetzt werden könnten.

Zusätzlich könnten zur weiteren Verbesserung des Flexschlauches, insbesondere falls höhere akustische Anforderungen an die Abgasanlage bezüglich der Vermeidung von Abgasströmungsgeräuschen und sonstigen Nebengeräuschen gestellt werden, die folgenden Bauelemente eingebaut werden: ein Metallschlauch 40, der innerhalb des Wellenbalgs 10 angeordnet ist; wahlweise jeweils ein Drahtgestrick 50 und/oder 60 zwischen dem Wellenbalg 10 und der Außenumflechtung 30 und/oder dem Wellenbalg 10 und dem Metallschlauch 40.

Diese zusätzlichen Bauteile sind jedoch zur Erreichung des Ziels, welches der vorliegenden Erfindung zugrunde liegt, nicht notwendigerweise vorzusehen. Die erfindungsgemäße Lösung für die Nachteile bzw. Probleme, die dem Stand der Technik anhaften, ist in der Wellung oder Ondulierung der Außenumflechtung 30 des Flexschlauches zu sehen.

Durch diese sehr einfach durchzuführende Maßnahme werden die Resonanzschwingungen des Wellenbalgs 10 gedämpft sowie Rassel- und Schwirrgeräusche zwischen der Außenumflechtung 30 und dem Wellenbalg 10 verhindert, und zwar ohne das Einbauen oder Vorsehen von zusätzlichen Bauteilen, wie im Stand der Technik vorgeschlagen.

Die Vorspannung, mit der die Außenumflechtung 30 am Wellenbalg 10 anliegt, erzeugt eine Anpressung, die nicht durch die Vibrations-Massenkräfte überwunden werden darf, um eine entsprechende Dämpfungswirkung erzielen zu können.

Die Ausführung der Wellung der Außenumflechtung 30 hängt vom Einsatzfall ab. Grundsätzlich hat sich jedoch gezeigt, daß Längswellen, wie in der Figur 2 dargestellt, d.h. in axialer Richtung des Flexschlauches verlaufend, eine bessere Dämpfung der Schwingungen (Resonanzschwingungen des Wellenbalgs) bewirken. Verlaufen hingegen die Wellen in Umfangsrichtung des Flexschlauches, so kann die bei einer Axialverformung (Stauchen und Dehnen des Flexschlauches) entstehende radiale Hub- und Senkbewegung der Außenumflechtung verringert werden und dadurch ein Rassel- oder Aufschlaggeräusch vermieden werden. Alternativ wäre auch eine im Winkel zur Längsachse verlaufende Wellung denkbar oder ein Wellenmuster. Im Ergebnis ist die Anzahl und die Ausrichtung der Wellen der Ondulierung vom Einsatzfall abhängig und wird beispielsweise von den folgenden Parametern beeinflußt: Abmessungen des Flexschlauches, Materialien der Bauelemente, Abmessungen der Bauteile, Anbringung am Kfz, Motorschwingungen, Abgasschwingungen, etc.

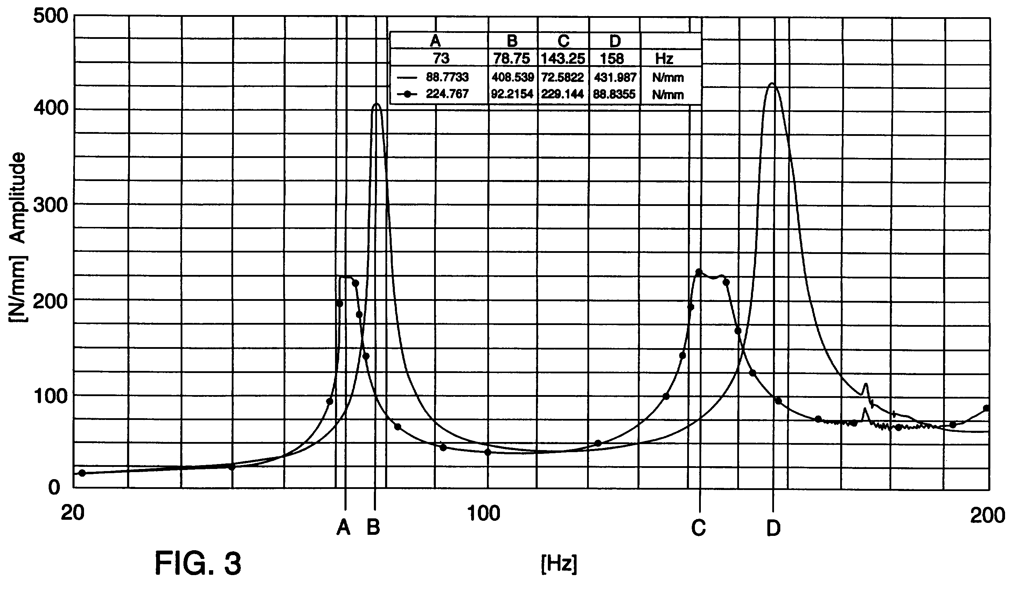

In der Figur 3 ist ein Diagramm dargestellt, in dem die axiale dynamische Steifigkeit des Flexschlauches [N/mm] über der Frequenz [Hz] aufgezeichnet ist. Die durchgezogene Linie ohne Punkte bezeichnet das Meßergebnis eines herkömmlichen Flexschlauches, d.h. ohne Wellung. Die durchgezogene Kurve mit Punkten stellt das Meßergebnis dar, welches mit einem erfindungsgemäßen Flexschlauch erhalten wird.

Die Schwingungsanregung erfolgte bei dem Versuch nach der Figur 3 mit konstant 0,2 mm in axialer Richtung (ungefähr die übliche Anregung im Fahrzeug).

Aus dem Diagramm nach der Figur 3 ist zu ersehen, daß auch deutlich niedrigere Resonanzfrequenzen bei 73 Hz und bei 143,25 Hz erreicht werden und daß die dynamischen Steifigkeiten mit etwa 224 N/mm und 229 N/mm deutlich geringer ausfallen, als bei einem herkömmlichen Flexschlauch. Das bedeutet, daß die Resonanzamplituden des Flexschlauches sehr viel kleiner sind, nämlich infolge der Dämpfungswirkung der gewellten Umflechtung auf dem Metallbalg.

Zusammenfassend ist den Meßergebnissen damit zu entnehmen, daß eine deutliche Dämpfung durch den erfindungsgemäßen Flexachlauch erreicht wird. Bei der Durchführung der Versuche wurde zudem festgestellt, daß auch akustisch eine deutliche Geräuschabnahme vorliegt.

Der erfindungsgemäße Flexschlauch, der insbesondere für eine Abgasleitung eines Verbrennungsmotors bei einem Kraftfahrzeug vorgesehen ist, weist zumindest einen Wellenbalg, eine Außenumflechtung und vorzugsweise zwei Endhülsen auf, die an den beiden Enden des Flexschlauches den Wellenbalg und die Außenumflechtung fassen und festhalten, wobei die Außenumflechtung eine Wellung bzw. Ondulierung aufweist. Durch die Wellen der Ondulierung der Außenumflechtung wird an mehreren Stellen eine Vorspannung zwischen der Außenumflechtung und dem Wellenbalg erzeugt, die zur Verhinderung von Rasselgeräuschen bei auftretenden Schwingungen dient. Im Ergebnis wird eine Resonanzbedämpfung des Metallbalgs durch Reibung zwischen diesen Bauteilen bewirkt. Die durch die Wellung erzeugte Vorspannung ist dabei im allgemeinen gering und hängt von unterschiedlichen Parametern, wie beispielsweise den geometrischen Abmessungen der Elemente des Flexschlauches, den eingesetzten Materialien und den zu absorbierenden bzw. zu dämpfenden Schwingungen ab.

### BEZUGSZEICHENLISTE

- 10: Wellenbalg
- 20: Endhülse(n)
- 21: Aufweitung
- 25: Abgasleitung
- 30: Außenumflechtung
- 31: Abplattung
- 32: Abplattung
- 33: Abplattung
- 34: Wellenberg
- 40: Metallschlauch
- 50: Drahtgestrick
- 60: Drahtgestrick

## Patentansprüche

1. Flexschlauch, insbesondere für eine Abgasleitung eines Verbrennungsmotors bei einem Kraftfahrzeug, mit
einem Wellenbalg (10),
einer Außenumflechtung (30), und
zwei Endhülsen (20), die an den beiden Enden des Flexschlauches den Wellenbalg (10) und die Außenumflechtung (30) fassen,
**dadurch gekennzeichnet,** daß
die Außenumflechtung (30) eine Wellung aufweist.

2. Flexschlauch nach Anspruch 1, dadurch gekennzeichnet, daß die Wellung an der Außenumflechtung (30) Wellen aufweist, die in Längsrichtung des Flexschlauches verlaufen.

3. Flexschlauch nach Anspruch 1 oder 2, dadurch gekennzeichnet, daß die Wellung an der Außenumflechtung (30) Wellen aufweist, die in Umfangsrichtung des Flexschlauches verlaufen.

4. Flexschlauch nach Anspruch 1, dadurch gekennzeichnet, daß die Wellung an der Außenumflechtung (30) Wellen aufweist, die unter einem vorbestimmten Winkel zu der Längsrichtung des Flexschlauches verlaufen.

5. Flexschlauch nach einem der Ansprüche 1 bis 4, dadurch gekennzeichnet, daß der Wellenbalg (10) aus Metall gefertigt ist und 1- oder 2-lagig ausgebildet ist.

6. Flexschlauch nach einem der Ansprüche 1 bis 5, dadurch gekennzeichnet, daß die Außenumflechtung (30) aus Metall gefertigt ist.

7. Flexschlauch nach einem der Ansprüche 1 bis 6, dadurch gekennzeichnet, daß die Außenumflechtung (30) ein Kreuzgeflecht aufweist.

8. Flexschlauch nach einem der Ansprüche 1 bis 7, dadurch gekennzeichnet, daß die Endhülsen (20) als ringförmige Elemente ausgebildet sind, die an einer Umfangskante eine Aufweitung (21) aufweisen.

9. Flexschlauch nach Anspruch 5, dadurch gekennzeichnet, daß die Dicke jeder Lage des Wellenbalges (10) etwa 0,15 bis 0,25 mm beträgt.

10. Flexschlauch nach einem der Ansprüche 1 bis 9, dadurch gekennzeichnet, daß innerhalb des Wellenbalgs (10) ein Metallschlauch (40) vorgesehen ist, der in Form eines Agraffschlauches oder eines Drahtgeflechtes ausgebildet ist.

11. Flexschlauch nach Anspruch 10, dadurch gekennzeichnet, daß zwischen dem Metallschlauch (40) und dem Wellenbalg (10) ein Drahtgestrick (60) vorgesehen ist.
